# EUROPEAN PATENT APPLICATION

(11) **EP 4 742 431 A1**
(43) Date of publication of application: **13.05.2026**
(21) Application number: 25777194.9
(22) Date of filing: 21.04.2025
(51) Int. Cl.: H01M 50/569, H01M 50/519

(54) **BATTERY MODULE INFORMATION COLLECTION CONNECTION SYSTEM AND ELECTRIC DEVICE**

(30) Priority: 01.11.2024 CN 202411555638; 01.11.2024 CN 202422670580 U
(71) Applicant: Eve Energy Co., Ltd., Huizhou, Guangdong 516006 (CN)
(72) Inventor: ZHOU, Hongquan, Huizhou, Guangdong 516006 (CN); YAN, Huaping, Huizhou, Guangdong 516006 (CN); ZHONG, Yu, Huizhou, Guangdong 516006 (CN)
(74) Representative: Cabinet Beaumont
(86) International application number: PCT/CN2025/090037
(87) International publication number: WO 2025/201566

(57) **Abstract**

Provided are a battery module information collection and connection system and a powered device. The system includes an insulating bracket (100), flexible circuit boards (200), a battery control member (300), a first conductive portion (400), a collection member (500) and a battery module (600). The insulating bracket (100) is disposed on the battery module (600). The flexible circuit boards (200) include a first flexible circuit board (210) and a second flexible circuit board (220). The first flexible circuit board (210) is disposed on a side of the insulating bracket (100) facing away from the battery module (600), and the second flexible circuit board (220) is disposed on a side of the insulating bracket (100) facing the battery module (600). The flexible circuit board (200) is connected to the battery control member (300), and the cell is connected to a flexible circuit board (200) through the collection member (500). The battery control member (300) is connected to the battery module (600). The first conductive portion (400) is disposed on a side of the insulating bracket (100) facing away from the second flexible circuit board (220) and corresponds to the position of the second flexible circuit board (220). One end of the first conductive portion (400) is connected to the battery control member (300), and the other end of the first conductive portion (400) is connected to a high-voltage interface, and the high-voltage interface is communicatively connected to the battery control member (300).

## Description

The present application claims priority to Chinese Patent Application No. 202411555638.1, filed with the China National Intellectual Property Administration (CNIPA) on Nov. 1, 2024, and claims priority to Chinese Patent Application No. 202422670580.7, filed with the CNIPA on Nov. 1, 2024, the disclosures of which are incorporated herein by reference in their entireties.

### TECHNICAL FIELD

The present application relates to the technical field of power batteries, for example, a battery module information collection and connection system, and a powered device including the battery module information collection and connection system.

### BACKGROUND

With the rapid development of new energy vehicles, users have put forward higher requirements for the cruising range of the whole vehicle, and meanwhile, have put forward requirements for higher economy. At present, conventional solutions are mainly to increase the charge capacity of the battery pack or to improve the charging efficiency of the battery pack. The high integration of the system grouping design is achieved in a manner of a cell to pack (CTP)/cell to chassis (CTC) and the like.

### Technical problem

The related structural grouping technology has reached a certain bottleneck. For large-capacity battery modules, it is difficult to achieve absolute isolation between a high-voltage circuit and a low-voltage circuit. During high-voltage output, the high-voltage circuit may interfere with the low-voltage circuit, such as the accuracy of the battery module information collected by the collection wire harness.

### SUMMARY

### Technical solutions

On the one hand, the present application provides a battery module information collection and connection system. The battery module information collection and connection system includes an insulating bracket, flexible circuit boards, a battery control member, a first conductive portion, a collection member, and a battery module composed of multiple cells. The insulating bracket is disposed on the battery module. The flexible circuit boards include multiple first flexible circuit boards and at least one second flexible circuit board. A first flexible circuit board of the multiple first flexible circuit boards is disposed on a side of the insulating bracket facing away from the battery module, and the at least one second flexible circuit board is disposed on a side of the insulating bracket facing the battery module. A first flexible circuit board of the multiple first flexible circuit boards and a second flexible circuit board of the at least one second flexible circuit board are connected to the battery control member. A cell of the multiple cells is connected to the first flexible circuit board or the second flexible circuit board through the collection member. The battery control member is connected to the battery module. The first conductive portion is disposed on a side of the insulating bracket facing away from the at least one second flexible circuit board, and a position of the first conductive portion corresponds to a position of the at least one second flexible circuit board. The first conductive portion and a first flexible circuit board of the multiple first flexible circuit boards are disposed at intervals. A first end of the first conductive portion is connected to the battery control member, a second end of the first conductive portion is connected to a high-voltage interface, and the high-voltage interface is communicatively connected to the battery control member.

On the other hand, the present application provides a powered device. The powered device includes a mounting base and the battery module information collection and connection system described in any one of the embodiments. The battery module of the battery module information collection and connection system is mounted on the mounting base.

### Beneficial effects

In some embodiments of the present application, the first conductive portion is used as a high-voltage conveying device, the flexible circuit board and the like is used as a low-voltage conveying device, the first conductive portion and the corresponding second flexible circuit board are respectively disposed on two sides of the insulating bracket, and the first flexible circuit board located on the same side of the insulating bracket as the first conductive portion is disposed to be spaced apart from the first conductive portion, thereby achieving physical isolation between the high-voltage conveying device and the low-voltage conveying device, ensuring high-voltage insulation, and improving information collection accuracy of the battery module.

In some embodiments of the present application, the flexible circuit board, the battery information collector (BIC), the battery management controller (BMC) and the battery disconnect unit (BDU) are all mounted on the insulating bracket, the flexible circuit board is connected to the BIC through the collection member, and each flexible circuit board correspondingly collects the voltage and the temperature information of the cell in one region, so that the voltage and the temperature information of the entire battery module may be transmitted to the BIC and transmitted to the BMC through the BIC, and whether the battery module is abnormal is determined by using the BMC. Moreover, the BDU controls the charging and discharging of the entire battery module according to the information fed back by the BMC and the information when the fast-charging plug interface is plugged into the external charging terminal. The battery module information collection and connection system of the present application has highly integrated functions, a compact overall structure, and a large battery capacity of the battery module.

In some embodiments of the present application, the conductive sheet is provided, and the conductive sheet is welded to the flexible circuit board and the conductive busbar, i.e., the aluminum busbar. The electrical connection is achieved through welding and fixing, so that the use of a connector, a wire harness, and the like can be significantly reduced, and thus, the weight and the processes can be reduced.

In some embodiments of the present application, for the large-capacity battery module, the flexible circuit board is divided into an upper and lower layer overlapping structure, where the upper overlapping structure is in contact with the lower layer overlapping structure, and the BIC is designed as dual collection ports, and the dual collection ports of each BIC are welded and connected to connection ends of upper and lower layers of the flexible circuit board, respectively, which can not only improve the information collection accuracy of the battery module, but also reduce the use of the wire harness and the connector.

### BRIEF DESCRIPTION OF THE DRAWINGS

FIG. 1 is a schematic structural diagram of a battery module information collection and connection system according to some embodiments of the present application;
FIG. 2 is an exploded schematic diagram of a battery module information collection and connection system according to some embodiments of the present application;
FIG. 3 is a partial enlarged view of part A of FIG. 2;
FIG. 4 is a partial enlarged view of part B of FIG. 2;
FIG. 5 is a schematic diagram of the assembly of an insulating bracket, a BIC, a flexible circuit board, a busbar, and a temperature sensor according to some embodiments of the present application;
FIG. 6 is a partial enlarged view of part C of FIG. 5;
FIG. 7 is a partially exploded schematic diagram of a flexible circuit board, a BIC, and an insulating bracket according to some embodiments of the present application;
FIG. 8 is an exploded schematic diagram of a first flexible circuit board and a corresponding BIC according to some embodiments of the present application;
FIG. 9 is an exploded schematic diagram of a second flexible circuit board, a corresponding BIC and an insulating bracket according to some embodiments of the present application;
FIG. 10 is a schematic structural diagram of a BIC according to some embodiments of the present application; and
FIG. 11 is a schematic structural diagram of a powered device according to some embodiments of the present application.

### List of reference numbers

- 100: insulating bracket
- 110: support base
- 120: positioning post
- 200: flexible circuit board
- 201: flexible circuit board body
- 202: connection portion
- 203: hollow portion
- 210: first flexible circuit board
- 211: first sub-flexible circuit board
- 212: second sub-flexible circuit board
- 213: first connection end
- 214: second connection end
- 220: second flexible circuit board
- 221: third sub-flexible circuit board
- 222: fourth sub-flexible circuit board
- 223: third connection end
- 224: fourth connection end
- 300: battery control member
- 310: BIC
- 311: first collection port
- 312: second collection port
- 313: positioning hole
- 320: BMC
- 330: BDU
- 400: first conductive portion
- 410: first copper busbar
- 420: second copper busbar
- 500: collection member
- 510: temperature sensor
- 520: PCB
- 530: busbar
- 531: first aluminum busbar
- 5311: first connection portion
- 5312: second connection portion
- 532: second aluminum busbar
- 5321: third connection portion
- 5322: fourth connection portion
- 533: third aluminum busbar
- 540: conductive sheet
- 600: battery module
- 710: high-voltage interface
- 720: fast-charging plug interface
- 730: low-voltage interface
- 800: third conductive portion
- 900: fourth conductive portion
- 1000: powered device
- 1001: battery module information collection and connection system
- 1002: mounting base

### DETAILED DESCRIPTION

Hereinafter, embodiments of the present application will be described with reference to the accompanying drawings, and the described embodiments are some related embodiments of the present application.

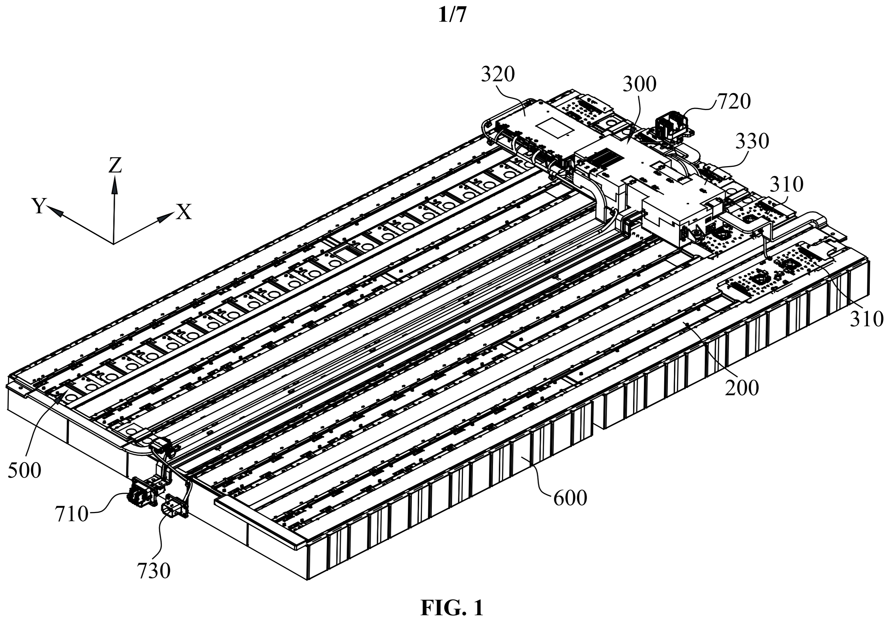

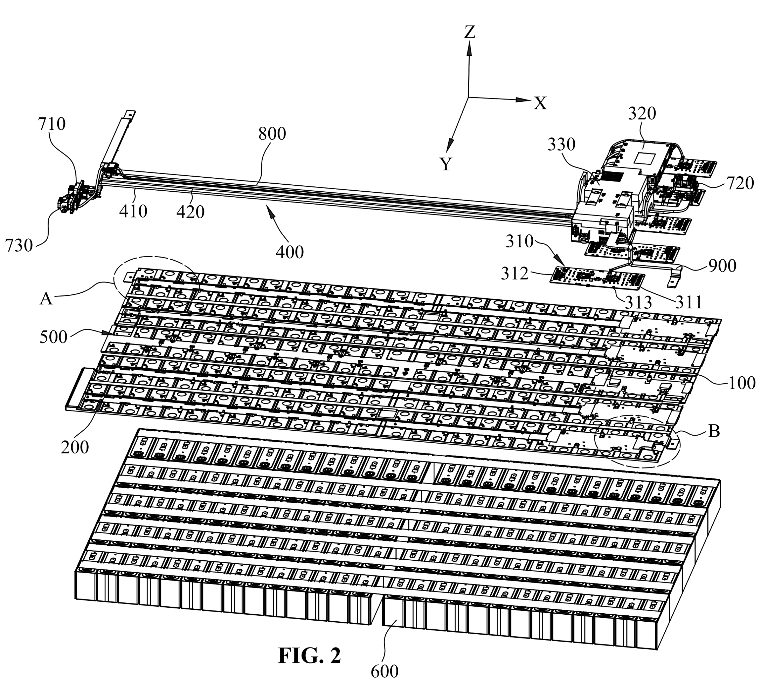

As shown in FIGS. 1 to 10, the battery module information collection and connection system of this embodiment includes an insulating bracket 100, flexible circuit boards 200, a battery control member 300, a first conductive member 400, a collection member 500, and a battery module 600 composed of multiple cells.

The insulating bracket 100 is disposed on the battery module 600. The flexible circuit boards 200 include multiple first flexible circuit boards 210 and at least one second flexible circuit board 220. The first flexible circuit board 210 is disposed on a side of the insulating bracket 100 facing away from the battery module 600. The second flexible circuit board 220 is disposed on a side of the insulating bracket 100 facing the battery module 600. The first flexible circuit board 210 and the second flexible circuit board 220 are connected to the battery control member 300. The cell is connected to the first flexible circuit board 210 or the second flexible circuit board 220 through the collection member 500. The battery control member 300 is connected to the battery module 600. The first conductive portion 400 is disposed on a side of the insulating bracket 100 facing away from the second flexible circuit board 220, and a position of the first conductive portion 400 corresponds to a position of the second flexible circuit board 220. The first conductive portion 400 and the first flexible circuit board 210 are disposed at intervals. A first end of the first conductive portion 400 is connected to the battery control member 300, a second end of the first conductive portion 400 is connected to a high-voltage interface 710, and the high-voltage interface 710 is communicatively connected to the battery control member 300.

The first conductive portion 400 for connecting the high-voltage interface 710 is classified as a high-voltage transmission device, while the flexible circuit board 200 is classified as a low-voltage transmission device. In this embodiment, the second flexible circuit board 220 is disposed on a back surface of the insulating bracket 100 (e.g., disposed on the side of the insulating bracket 100 facing the battery module 600), and the first flexible circuit board 210 is disposed on a front surface of the insulating bracket 100 (e.g., disposed on the side of the insulating bracket 100 facing away from the battery module 600). The insulating bracket 100 physically isolates the second flexible circuit board 220 as the low-voltage transmission device from the first conductive portion 400 as the high-voltage transmission device, thereby ensuring high-voltage insulation and preventing damage to the low-voltage transmission device caused by contact between the high-voltage transmission device and the low-voltage transmission device.

Optionally, the insulating bracket 100 is composed of multiple sub-insulating brackets. In other embodiments, the insulating bracket 100 may also be integrally injection molded. The battery module 600 is composed of multiple battery modules, each battery module includes multiple cells arranged in an array, and the cell has a square structure.

In some embodiments, the length of the insulating bracket 100 extends in an X direction, and the width of the insulating bracket 100 extends in a Y direction perpendicular to the X direction. The insulating bracket 100 has a first end and a second end in the X direction. The battery control member 300 is adjacent to the first end of the insulating bracket 100, and the high-voltage interface 710 is adjacent to the second end of the insulating bracket 100. The lengths of the first flexible circuit board 210, the second flexible circuit board 220, and the first conductive portion 400 extend in the X direction.

In this embodiment, the battery control member 300 and the high-voltage interface 710 are respectively disposed adjacent to two ends of the insulating bracket 100 in the X direction. Compared with disposing them at two ends of the insulating bracket 100 in the Y direction, this configuration extends the length of each flexible circuit board 200, and reduces the number of flexible circuit boards 200. The first conductive portion 400, whose length also extends in the X direction, and the flexible circuit boards 200 are disposed at intervals, thereby resulting in a more compact and rational overall layout.

The first conductive portion 400 in this embodiment is a copper busbar, which is suitable for high-voltage transportation.

In some embodiments, the battery control member 300 includes a BMC 320, a BDU 330 and multiple BICs 310. The BMC 320, the BDU 330 and the multiple BICs 310 are located on the side of the insulating bracket 100 facing away from the battery module 600. Each first flexible circuit board 210 is connected to one BIC 310, and each second flexible circuit board 220 is connected to one BIC 310. The BDU 330 is connected to a fast-charging plug interface 720. The BDU 330 is connected to the high-voltage interface 710 through the first conductive member 400. The BDU 330, the high-voltage interface 710 and the BICs 310 are each communicatively connected to the BMC 320.

In this embodiment, each cell is connected to the first flexible circuit board 210 or the second flexible circuit board 220 through one collection member 500. The first flexible circuit board 210 and the second flexible circuit board 220 collect a temperature/a piece of voltage information of a corresponding cell and transmit it to a corresponding BIC 310, transmit it to the BMC 320 through the BIC 310, and whether the battery module 600 is abnormal is determined by using the BMC 320. Moreover, the BDU 330 controls the charging and discharging of the entire battery module 600 according to the information fed back by the BMC 320 and the information when the high-voltage interface 710 is plugged into the external charging terminal. The battery module information collection and connection system in this embodiment has highly integrated functions, a compact overall structure, and a large battery capacity of the battery module 600.

In some embodiments, the multiple BICs 310 are disposed at intervals in the Y direction, each BIC 310 is connected to one flexible circuit board 200, and two adjacent BICs 310 are communicatively connected through a communication line. One BIC 310 close to an edge of the insulating bracket 100 in the Y direction is communicatively connected to the BMC 320 through the communication line, so that the information of the battery module 600 collected by the multiple BICs 310 may be transmitted to the BMC 320.

In some embodiments, the first flexible circuit board 210 is welded to the BIC 310 corresponding to the first flexible circuit board 210, and the second flexible circuit board 220 passes through the insulating bracket 100 and is welded to the BIC 310 corresponding to the second flexible circuit board 220. The electrical connection between the BIC 310 and the flexible circuit board 200 is achieved through welding and fixing, so that the use of a connector, a wire harnesses, and the like can be significantly reduced, the weight and the processes can be reduced, and thus the cost can be saved.

Optionally, the term "pass through" means that one component extends from one side of another component to the opposite side. This can be achieved by penetrating through another component or flipping over from the edge of another component to the other side.

Optionally, in this embodiment, four first flexible circuit boards 210 are provided, and one second flexible circuit board 220 is provided. The four first flexible circuit boards 210 are symmetrical with respect to the first conductive portion 400, and the one second flexible circuit board 220 is located directly below the first conductive portion 400 in a Z direction, that is, the second flexible circuit board 220 and the first conductive portion 400 are located on two sides of the insulating bracket 100 in the Z direction, respectively. In other embodiments, the second flexible circuit board 220 may also be disposed at the edge of the insulating bracket 100 in the Y direction, and correspondingly, the first conductive portion 400 is also disposed at the edge of the insulating bracket 100 in the Y direction.

In some embodiments, the first conductive portion 400 includes a first copper busbar 410 and a second copper busbar 420. The first copper busbar 410 and the second copper busbar 420 are disposed side by side and at intervals. Lengths of the first copper busbar 410 and the second copper busbar 420 extend in the X direction. Two ends of the first copper busbar 410 are respectively connected to the high-voltage interface 710 and the BDU 330, and two ends of the second copper busbar 420 are respectively connected to the high-voltage interface 710 and the BDU 330.

In some embodiments, the BIC 310 has a first collection port 311 and a second collection port 312. The first collection port 311 and the second collection port 312 are located at two ends of the BIC 310 in the X direction, respectively, and the first collection port 311 is adjacent to the first end of the insulating bracket 100.

The first flexible circuit board 210 includes a first sub-flexible circuit board 211 and a second sub-flexible circuit board 212. The first sub-flexible circuit board 21 is located on a side of the second sub-flexible circuit board 212 facing the insulating bracket 100. The first sub-flexible circuit board 211 is welded to the first collection port 311 of the BIC 310 corresponding to the first sub-flexible circuit board 211, and the second sub-flexible circuit board 212 is welded to the second collection port 312 of the BIC 310 corresponding to the second sub-flexible circuit board 212.

The second flexible circuit board 220 includes a third sub-flexible circuit board 221 and a fourth sub-flexible circuit board 222. The third sub-flexible circuit board 221 is located on a side of the fourth sub-flexible circuit board 222 facing away from the insulating bracket 100, the third sub-flexible circuit board 221 passes through the insulating bracket 100 and is welded to the first collection port 311 of the BIC 310 corresponding to the third sub-flexible circuit board 221, and the fourth sub-flexible circuit board 222 passes through the insulating bracket 100 and is welded to the second collection port 312 of the BIC 310 corresponding to the fourth sub-flexible circuit board 222.

In this embodiment, the first flexible circuit board 210 is designed as an upper-lower layered structure in the Z direction, that is, the first sub-flexible circuit board 211 located at the lower layer and the second sub-flexible circuit board 212 located at the upper layer. Similarly, the second flexible circuit board 220 is designed as an upper-lower layered structure in the Z direction, that is, the third sub-flexible circuit board 221 located at the lower layer and the fourth sub-flexible circuit board 222 located at the upper layer. The first sub-flexible circuit board 211 is welded to the first collection port 311 of the BIC 310 corresponding to the first sub-flexible circuit board 211, the second sub-flexible circuit board 212 is welded to the second collection port 312 of the BIC 310 corresponding to the second sub-flexible circuit board 212, the third sub-flexible circuit board 221 is welded to the first collection port 311 of the BIC 310 corresponding to the third sub-flexible circuit board 221, and the fourth sub-flexible circuit board 222 is welded to the second collection port 312 of the BIC 310 corresponding to the fourth sub-flexible circuit board 222, thereby achieving information collection of the battery module 600. Compared with the conventional structure using a single-layer flexible circuit board and a single-port collection, in this embodiment, the flexible circuit board is designed to be a double-layer structure, and the dual-port collection is adopted for the BIC310, the flexible circuit board with the double-layer structure are welded in correspondence with the dual ports, which can effectively improve the collection efficiency of the battery module information and enable collection of information from more cells. Additionally, the connection is achieved through welding, so that the use of the wire harness can be saved, and the connection structure between the flexible circuit board 200 and the BIC 310 can be simplified. Exemplarily, two opposing sides of the first sub-flexible circuit board 211 and the second sub-flexible circuit board 212 in the Z direction are connected to each other by adhesion.

In this embodiment, a first end of the first sub-flexible circuit board 211 in the X direction overlaps with and is in contact with the second sub-flexible circuit board 212, a second end of the first sub-flexible circuit board 211 in the X direction extends to the first end of the insulating bracket 100 and is turned over to form a first connection end 213, and the first connection end 213 is welded to the first collection port 311 of the BIC 310 corresponding to the first sub-flexible circuit board 211. A first end of the second sub-flexible circuit board 212 in the X direction extends to the second end of the insulating bracket 100, a second end of the second sub-flexible circuit board 212 in the X direction extends to overlap with and is in contact with the first sub-flexible circuit board 211 and is bent to form a second connection end 214, and the second connection end 214 is welded to the second collection port 312 of the BIC 310 corresponding to the second sub-flexible circuit board 212.

A first end of the third sub-flexible circuit board 221 in the X direction overlaps with and is in contact with the fourth sub-flexible circuit board 222, a second end of the third sub-flexible circuit board 221 in the X direction extends to the first end of the insulating bracket 100 and is turned over to form a third connection end 223, the third connection end 223 is located on the side of the insulating bracket 100 facing away from the battery module 600 and is welded to the first collection port 311 of the BIC 310 corresponding to the third sub-flexible circuit board 221. A first end of the fourth sub-flexible circuit board 222 in the X direction extends to the second end of the insulating bracket 100, a second end of the fourth sub-flexible circuit board 222 in the X direction extends to overlap with and is in contact with the third sub-flexible circuit board 221 and is bent and passes through the insulating bracket 100 to form a fourth connection end 224. The fourth connection end 224 is located on the side of the insulating bracket 100 facing away from the battery module 600 and is welded to the second collection port 312 of the BIC 310 corresponding to the fourth sub-flexible circuit board 222. The insulating bracket 100 is provided with an avoidance port for the fourth sub-flexible circuit board 222 to pass through.

In this embodiment, the overlapping length between the first sub-flexible circuit board 211 and the second sub-flexible circuit board 212 and the overlapping length between the third sub-flexible circuit board 221 and the fourth sub-flexible circuit board 222 may be determined according to the actual number of cells of the battery module 600. A main body portion of the first sub-flexible circuit board 211 is located below the BIC 310 (e.g., located on a side of the BIC 310 facing the insulating bracket 100) corresponding to the first sub-flexible circuit board 211, the first end of the first sub-flexible circuit board 211 extends below, overlaps with and is in contact with the second sub-flexible circuit board 212, and the second end of the first sub-flexible circuit board 211 extends to the first end of the insulating bracket 100 and is turned upwards (e.g., towards the BIC 310) to form the first connection end 213 for welding to the first collection port 311. A main body portion of the second sub-flexible circuit board 212 and the BIC 310 corresponding to the second sub-flexible circuit board 212 are disposed in a staggered manner in the X direction, the second end of the second sub-flexible circuit board 212 extends to the side of the first sub-flexible circuit board 211 facing away from the insulating bracket 100, overlaps with and is in contact with the first sub-flexible circuit board 211, and the overlapped second sub-flexible circuit board 212 is turned upwards to form the second connection end 214 for welding to the second collection port 312.

The first end of the third sub-flexible circuit board 221 extends in the X direction to a lower side of the fourth sub-flexible circuit board 222 (e.g., a side of the fourth sub-flexible circuit board 222 facing away from the insulating bracket 100), overlaps with and is in contact with the fourth sub-flexible circuit board 222. The second end of the third sub-flexible circuit board 221 extends close to the first end of the insulating bracket 100 and is turned upwards to bypass the insulating bracket 100, so as to form the third connection end 223 located on the side of the insulating bracket 100 facing away from the battery module 600. The main body portion of the fourth sub-flexible circuit board 222 and the BIC 310 corresponding to the fourth sub-flexible circuit board 222 are disposed in a staggered manner in the X direction. After the main body portion of the fourth sub-flexible circuit board 222 overlaps with and is in contact with the third sub-flexible circuit board 221, the main body portion of the fourth sub-flexible circuit board 222 continues to extend close to the BIC 310 corresponding to the fourth sub-flexible circuit board 222, then is bent upwards and passes through an avoidance hole disposed on the insulating bracket 100, so as to form the fourth connection end 224 located on the side of the insulating bracket 100 facing away from the battery module 600.

In this embodiment, the overall structure can be made more compact by reasonably arranging the first flexible circuit board 210 and the second flexible circuit board 220 of the double-layer structure and applying them to the information collection of the highly integrated and high-capacity battery module 600.

In some embodiments, the collection member 500 includes multiple temperature sensors 510 and multiple second conductive portions. The temperature sensor 510 is affixed to a surface of the cell and is connected to the flexible circuit board 200. The second conductive portion is connected to the flexible circuit board 200 and the cell.

The temperature sensor 510 is affixed to the surface of the cell and is connected to the flexible circuit board 200, so that temperature information collected by the temperature sensor 510 may be transmitted to the flexible circuit board 200. The second conductive portion is connected to the flexible circuit board 200 and the cell, so that voltage information of a corresponding cell may be collected by using the second conductive portion and the voltage information is transmitted to the flexible circuit board 200, and the flexible circuit board 200 transmits the collected temperature and voltage information to a corresponding BIC 310.

In some embodiments, the collection member 500 further includes a printed circuit board (PCB) 520. Multiple PCBs 520 are disposed at intervals on two sides of each flexible circuit board 200 in the Y direction. The PCB 520 is connected to the flexible circuit board 200. The temperature sensor 510 is welded to the PCB 520.

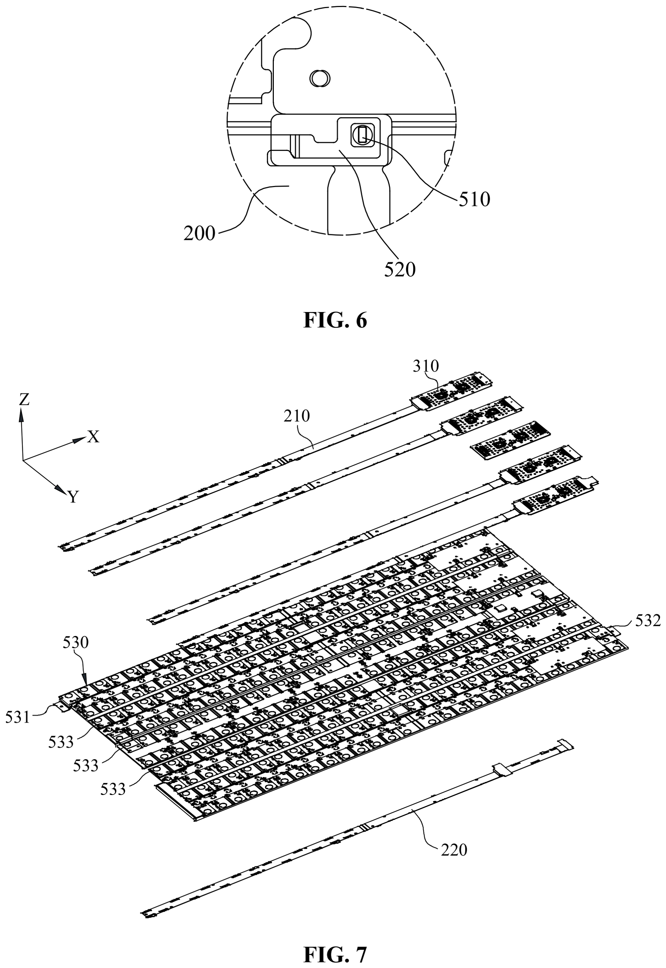

Optionally, as shown in FIG. 6, the temperature sensor 510 is affixed to the top cover of the cell by the thermally conductive adhesive and is welded to the PCB 520.

In this embodiment, the PCB 520 is disposed on two sides of the flexible circuit board 200 in a combination of flexible and rigid manners, and the temperature sensor 510 is welded onto the PCB 520, so that the mounting stability of the temperature sensor 510 can be improved, the information collection accuracy can be improved, and the use of wiring harness connection can be avoided.

In some embodiments, the second conductive portion includes a conductive busbar 530 and conductive sheets 540. All cells are connected in series through the conductive busbar 530, and the conductive sheet 540 is welded to the conductive busbar 530 and the flexible circuit board 200. The conductive busbar 530 is used to connect the positive and negative electrodes of adjacent cells to achieve the series connection of all cells of the battery module 600. The conductive sheet 540 is welded to the conductive busbar 530 and the flexible circuit board 200 and is configured to collect voltage information of the cell. In this embodiment, the flexible circuit board 200 and the conductive busbar 530 are connected by using the conductive sheet 540 and by welding, so that the use of a large number of wire harnesses can be avoided and the overall structure is more concise.

In some embodiments, the conductive sheet 540 is a nickel sheet, which has low material cost and good conductivity. The nickel sheet is welded to the conductive busbar 530 and the flexible circuit board 200, which can improve the information collection accuracy and stability of the battery module.

In some embodiments, the battery module information collection and connection system in this embodiment further includes a third conductive portion 800 and a fourth conductive portion 900. The third conductive portion 800 is located on the side of the insulating bracket 100 facing away from the battery module 600, and the third conductive portion 800 and the first conductive portion 400 are disposed side by side and at intervals.

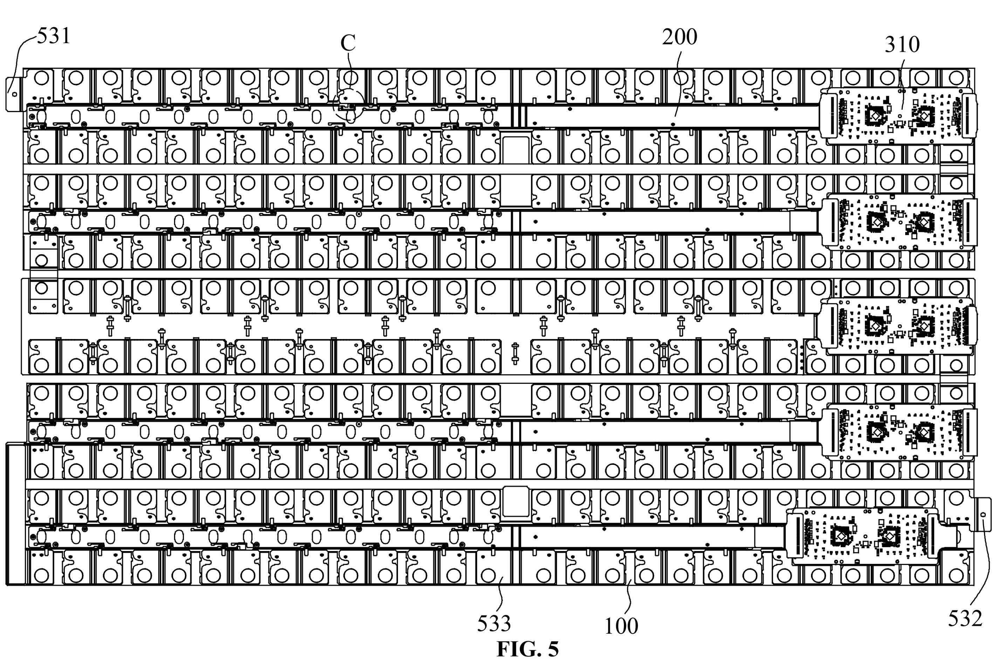

As shown in FIGS. 5 and 7, the conductive busbar 530 includes a first aluminum busbar 531, a second aluminum busbar 532 and multiple third aluminum busbars 533. All cells are connected in series through the third aluminum busbar 533. The first aluminum busbar 531 is connected to a positive electrode of one cell adjacent to the second end of the insulating bracket 100, and the second aluminum busbar 532 is connected to a negative electrode of another cell adjacent to the first end of the insulating bracket 100. The first aluminum busbar 531, the second aluminum busbar 532, and each third aluminum busbar 533 are each connected to a respective flexible circuit board 200 through one conductive sheet 540.

The battery control member 300 is connected to the first aluminum busbar 531 through the third conductive portion 800, and the battery control member 300 is connected to the second aluminum busbar 532 through the fourth conductive portion 900.

The first aluminum busbar 531 is connected to a positive electrode of one cell located at an edge of the battery module 600, that is, the first aluminum busbar 531 serves as the total positive terminal of the entire battery module 600. The second aluminum busbar 532 is connected to the negative electrode of another cell located at the edge of the battery module 600, that is, the second aluminum busbar 532 serves as a total negative terminal of the entire battery module 600. The first aluminum busbar 531 is electrically connected to the battery control member 300 through the third conductive portion 800, and the second aluminum busbar 532 is electrically connected to the battery control member 300 through the fourth conductive portion 900, so that charging and discharging of the entire battery module 600 may be controlled through the battery control member 300. Each of the first aluminum busbar 531 and the second aluminum busbar 532 is located at the edge of the insulating bracket 100, so that the third conductive portion 800 and the fourth conductive portion 900 extend to an outer side of the insulating bracket 100 and then are connected to the first aluminum busbar 531 and the second aluminum busbar 532, respectively, which facilitates the structural design of the third conductive portion 800 and the fourth conductive portion 900 and makes the overall layout of the battery module information collection and connection system more compact. In other embodiments, the first aluminum busbar 531 may be connected to the negative electrode of one cell located at the edge of the battery module 600, that is, the first aluminum busbar 531 serves as the total negative terminal of the entire battery module 600. The second aluminum busbar 532 is connected to the positive electrode of another cell located at the edge of the battery module 600, that is, the second aluminum busbar 532 serves as the total negative terminal of the entire battery module 600.

Exemplarily, the first conductive portion 400, the third conductive portion 800 and the fourth conductive portion 900 are all copper busbars. The first aluminum busbar 531 is connected to the BDU 330 through the third conductive portion 800, and the second aluminum busbar 532 is connected to the BDU 330 through the fourth conductive portion 900. The third conductive portion 800 and the first conductive portion 400 are disposed side by side, in parallel and at intervals. The second aluminum busbar 532 and the BDU 330 are adjacent to the first end of the insulating bracket 100; therefore, the length of the fourth conductive portion 900 for connecting the second aluminum busbar 532 and the BDU 330 is relatively short, and most of the fourth conductive portion 900 is located outside the insulating bracket 100. Therefore, Therefore, the structural layout in this embodiment is adopted, so that the overall structure of the battery module information collection and connection system becomes more concise, reasonable and compact.

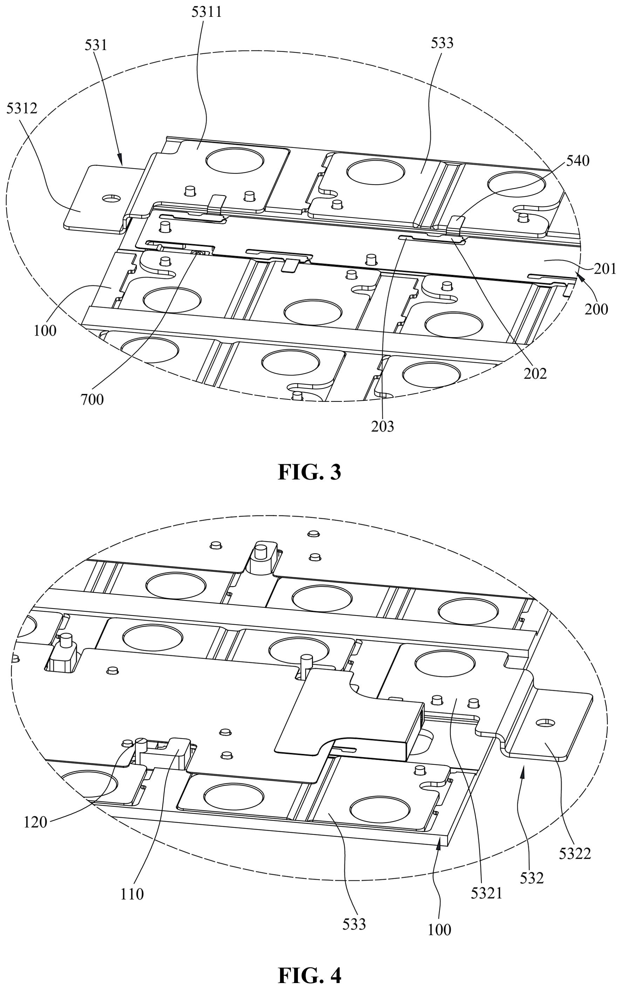

Exemplarily, the first conductive portion 400, the third conductive portion 800 and the fourth conductive portion 900 are all of a Z-like structure, and the connection stability between the copper busbar and the corresponding component can be improved by using this structure design. As shown in FIGS. 3 and 4, the first aluminum busbar 531 has a first connection portion 5311 and a second connection portion 5312 connected to each other. The first connection portion 5311 is located on the insulating bracket 100 and is welded to the positive electrode of the corresponding cell. The insulating bracket 100 is provided with an avoidance port corresponding to the pole of the cell. The second connection portion 5312 is located outside the insulating bracket 100 and is adjacent to the side of the insulating bracket 100 facing the battery module 600, the second connection portion 5312 is connected to the third conductive portion 800 through a bolt, and correspondingly, the second connection portion 5312 and the third conductive portion 800 are each provided with a connection hole for the bolt to pass through. The second aluminum busbar 532 has a third connection portion 5321 and a fourth connection portion 5322 connected to each other. The third connection portion 5321 is located on the insulating bracket 100 and is welded to the negative electrode of the corresponding cell. The fourth connection portion 5322 is located outside the insulating bracket 100 and is adjacent to the side of the insulating bracket 100 facing the battery module 600, and the fourth connection portion 5322 is connected to the fourth conductive portion 900 through the bolt. Correspondingly, the fourth connection portion 5322 and the fourth conductive portion 900 are each provided with a connection hole for the bolt to pass through. Both the first aluminum busbar 531 and the second aluminum busbar 532 are of the Z-like structure.

Exemplarily, the first aluminum busbar 531, the second aluminum busbar 532 and the third aluminum busbar 533 are each provided with a riveting hole, a hot riveting post is disposed on the insulating bracket 100, and the hot riveting post is matched with a corresponding riveting hole and fixed to it by hot riveting. The flexible circuit board 200 is also fixed by hot riveting through the hot riveting post on the insulating bracket 100. The flexible circuit board 200 includes a flexible circuit board body 201 and multiple connection portions 202. Multiple connection portions 202 corresponding to the conductive busbars 530 are disposed at intervals on two sides of the flexible circuit board body 201 in the Y direction, the connection portion 202 is connected to the flexible circuit board body 201, a hollow portion 203 is disposed between the connection portion 202 and the flexible circuit board body 201, and the connection portion 202 is welded to the conductive sheet 540. In this embodiment, the hollow portion 203 is disposed between the connection portion 202 and the flexible circuit board body 201, the connection portion 202 is slightly deformed when the connection portion 202 is vibrated and pulled by the conductive sheet 540, however, the hollow portion 203 is provided to prevent such deformation from affecting the flexible circuit board body 201, and thus, to prevent the information collection stability of the battery module from being affected due to the deformation of the flexible circuit board body 201. Exemplarily, a welding hole is provided at the welding point between the conductive sheet 540 and the connection portion 202. The welding is performed at the welding hole, so that the welding convenience can be improved, and the connection stability between the connection portion 202 and the conductive sheet 540 can be improved after welding.

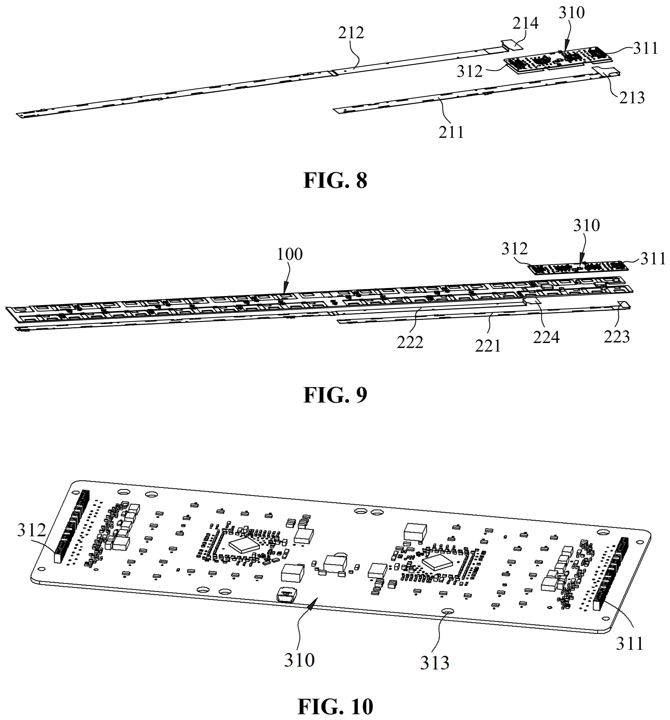

Exemplarily, as shown in FIG. 4, multiple support bases 110 and positioning posts 120 are disposed at intervals on the side of the insulating bracket 100 facing the BIC 310. As shown in FIG. 10, the BIC 310 is provided with a positioning hole 313 corresponding to the positioning post 120, and the positioning post 120 is in plug-in fit with the positioning hole 313. The BIC 310 is supported by the support base 110, so that a gap for mounting the flexible circuit board 200 exists between the BIC 310 and the insulating bracket 100.

The battery module information collection and connection system in this embodiment further includes a low-voltage interface 730, and the low-voltage interface 730 is connected to the BDU 330 through the communication line.

Exemplarily, the fast-charging plug interface 720 is located outside the insulating bracket 100 and is adjacent to the first end of the insulating bracket 100. The high-voltage interface 710 and the low-voltage interface 730 are located outside the insulating bracket 100 and are adjacent to the second end of the insulating bracket 100.

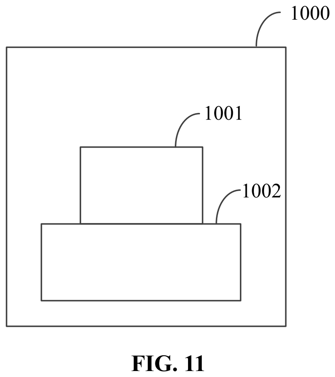

As shown in FIG. 11, this embodiment further provides a powered device 1000. The powered device 1000 includes a mounting base 1002 and the battery module information collection and connection system 1001 in any of the embodiments, and the battery module 600 of the battery module information collection and connection system 1001 is mounted on the mounting base 1002. The battery module information collection and connection system 1001 has a large number of cells, and the battery module 600 has a large capacity. After the powered device 1000, such as a new energy vehicle, is equipped with the battery module information collection and connection system 1001, the cruising range of the new energy vehicle can be effectively improved.

## Claims

1. A battery module information collection and connection system, comprising: an insulating bracket, flexible circuit boards, a battery control member, a first conductive portion, a collection member, and a battery module composed of a plurality of cells,
wherein the insulating bracket is disposed on the battery module, the flexible circuit boards comprise a plurality of first flexible circuit boards and at least one second flexible circuit board, the plurality of first flexible circuit boards are disposed on a side of the insulating bracket facing away from the battery module, the at least one second flexible circuit board is disposed on a side of the insulating bracket facing the battery module, a first flexible circuit board of the plurality of first flexible circuit boards and a second flexible circuit board of the at least one second flexible circuit board are connected to the battery control member, a cell of the plurality of cells is connected to the first flexible circuit board or the second flexible circuit board through the collection member, the battery control member is connected to the battery module, the first conductive portion is disposed on a side of the insulating bracket facing away from the at least one second flexible circuit board, a position of the first conductive portion corresponds to a position of the at least one second flexible circuit board, the first conductive portion and a first flexible circuit board of the plurality of first flexible circuit boards are disposed at intervals, a first end of the first conductive portion is connected to the battery control member, a second end of the first conductive portion is connected to a high-voltage interface, and the high-voltage interface is communicatively connected to the battery control member.

2. The battery module information collection and connection system of claim 1, wherein a length of the insulating bracket extends in an X direction, a width of the insulating bracket extends in a Y direction perpendicular to the X direction, the insulating bracket has a first end and a second end in the X direction, the battery control member is adjacent to the first end of the insulating bracket, the high-voltage interface is adjacent to the second end of the insulating bracket, and lengths of the plurality of first flexible circuit boards, a length of the at least one second flexible circuit board, and a length of the first conductive portion extend in the X direction.

3. The battery module information collection and connection system of claim 2, wherein the battery control member comprises a battery management controller, a battery disconnect unit and a plurality of battery information collectors, which are located on the side of the insulating bracket facing away from the battery module, each first flexible circuit board of the plurality of first flexible circuit boards is connected to one battery information collector of the plurality of battery information collectors, and each second flexible circuit board of the at least one second flexible circuit board is connected to one battery information collector of the plurality of battery information collectors, the battery disconnect unit is connected to a fast-charging plug interface, the battery disconnect unit is connected to the high-voltage interface through the first conductive portion, and the battery disconnect unit, the high-voltage interface, and the plurality of battery information collectors are each communicatively connected to the battery management controller.

4. The battery module information collection and connection system of claim 3, wherein the first flexible circuit board is welded to a battery information collector corresponding to the first flexible circuit board, and the second flexible circuit board is configured to pass through the insulating bracket and is welded to a battery information collector corresponding to the second flexible circuit board.

5. The battery module information collection and connection system of claim 4, wherein a battery information collector of the plurality of battery information collectors has a first collection port and a second collection port, the first collection port and the second collection port are located at two ends of the battery information collector in the X direction, and the first collection port is adjacent to the first end of the insulating bracket;
the first flexible circuit board comprises a first sub-flexible circuit board and a second sub-flexible circuit board, the first sub-flexible circuit board is located on a side of the second sub-flexible circuit board facing the insulating bracket, the first sub-flexible circuit board is welded to a first collection port of a battery information collector corresponding to the first sub-flexible circuit board, and the second sub-flexible circuit board is welded to a second collection port of a battery information collector corresponding to the second sub-flexible circuit board; and
the second flexible circuit board comprises a third sub-flexible circuit board and a fourth sub-flexible circuit board, the third sub-flexible circuit board is located on a side of the fourth sub-flexible circuit board facing away from the insulating bracket, the third sub-flexible circuit board is configured to pass through the insulating bracket and is welded to a first collection port of a battery information collector corresponding to the third sub-flexible circuit board, and the fourth sub-flexible circuit board is configured to pass through the insulating bracket and is welded to a second collection port of a battery information collector corresponding to the fourth sub-flexible circuit board.

6. The battery module information collection and connection system of claim 5, wherein a first end of the first sub-flexible circuit board in the X direction overlaps with and is in contact with the second sub-flexible circuit board, a second end of the first sub-flexible circuit board in the X direction extends to the first end of the insulating bracket and is turned over to form a first connection end, the first connection end is welded to the first collection port of the battery information collector corresponding to the first sub-flexible circuit board, a first end of the second sub-flexible circuit board in the X direction extends to the second end of the insulating bracket, a second end of the second sub-flexible circuit board in the X direction extends to overlap with and is in contact with the first sub-flexible circuit board and is configured to bent to form a second connection end, and the second connection end is welded to the second collection port of the battery information collector corresponding to the second sub-flexible circuit board; and
a first end of the third sub-flexible circuit board in the X direction overlaps with and is in contact with the fourth sub-flexible circuit board, a second end of the third sub-flexible circuit board in the X direction extends to the first end of the insulating bracket and is turned over to form a third connection end, the third connection end is located on the side of the insulating bracket facing away from the battery module and is welded to the first collection port of the battery information collector corresponding to the third sub-flexible circuit board, a first end of the fourth sub-flexible circuit board in the X direction extends to the second end of the insulating bracket, a second end of the fourth sub-flexible circuit board in the X direction extends to overlap with and is in contact with the third sub-flexible circuit board and is configured to bent and pass through the insulating bracket to form a fourth connection end, the fourth connection end is located on the side of the insulating bracket facing away from the battery module and is welded to the second collection port of the battery information collector corresponding to the fourth sub-flexible circuit board, and the insulating bracket is provided with an avoidance port for the fourth sub-flexible circuit board to pass through.

7. The battery module information collection and connection system of claim 2, wherein the collection member comprises a plurality of temperature sensors and a plurality of second conductive portions, a temperature sensor of the plurality of temperature sensors is affixed to a surface of a respective cell of the plurality of cells and is connected to a respective flexible circuit board of the flexible circuit boards, and a second conductive portion of the plurality of second conductive portions is connected to a respective flexible circuit board of the flexible circuit boards and a respective cell of the plurality of cells.

8. The battery module information collection and connection system of claim 7, wherein the collection member further comprises printed circuit boards, a plurality of the printed circuit boards are disposed at intervals on each of two sides of each flexible circuit board of the flexible circuit boards in the Y direction, a printed circuit board of the plurality of printed circuit boards is connected to a respective flexible circuit board of the flexible circuit boards, and a temperature sensor of the plurality of temperature sensors is welded to a respective printed circuit board of the plurality of printed circuit boards.

9. The battery module information collection and connection system of claim 7, wherein a second conductive portion of the plurality of second conductive portions comprises a conductive busbar and conductive sheets, the plurality of cells are connected in series through the conductive busbar, and a conductive sheet of the conductive sheets is welded to the conductive busbar and a respective flexible circuit board of the flexible circuit boards.

10. The battery module information collection and connection system of claim 8, further comprising a third conductive portion and a fourth conductive portion, wherein the third conductive portion is located on the side of the insulating bracket facing away from the battery module, and the third conductive portion and the first conductive portion are disposed side by side and at intervals;
the conductive busbar comprises a first aluminum busbar, a second aluminum busbar and a plurality of third aluminum busbars, the plurality of cells are connected in series through the plurality of third aluminum busbars, the first aluminum busbar is connected to a positive electrode of one cell adjacent to the second end of the insulating bracket, the second aluminum busbar is connected to a negative electrode of another cell adjacent to the first end of the insulating bracket, and the first aluminum busbar, the second aluminum busbar, and each of the plurality of third aluminum busbars are each connected to a respective flexible circuit board of the flexible circuit boards through one conductive sheet of the conductive sheets; and
the battery control member is connected to the first aluminum busbar through the third conductive portion, and the battery control member is connected to the second aluminum busbar through the fourth conductive portion.

11. The battery module information collection and connection system of any one of claims 2 to 10, further comprising a low-voltage interface, wherein the low-voltage interface is located at the second end of the insulating bracket and is adjacent to the high-voltage interface and is communicatively connected to the battery control member.

12. A powered device, comprising: a mounting base and the battery module information collection and connection system of any one of claims 1 to 11, wherein the battery module of the battery module information collection and connection system is mounted on the mounting base.
